# EUROPÄISCHE PATENTSCHRIFT

(11) **EP 2 522 067 B1**
(45) Veröffentlichungstag und Bekanntmachung des Hinweises auf die Patenterteilung: **02.09.2020**
(21) Anmeldenummer: 10781688.6
(22) Anmeldetag: 23.11.2010
(51) Int. Cl.: H02K 3/50, H02K 5/173, H02K 5/22, H02K 3/52

(54) **LAGERSCHILD**
BEARING SHIELD
FLASQUE

(30) Priorität: 07.01.2010 DE 102010000710
(43) Veröffentlichungstag der Anmeldung: 14.11.2012
(73) Patentinhaber: Robert Bosch GmbH, 70442 Stuttgart (DE)
(72) Erfinder: HELMI, Hussam, 71672 Marbach (DE)
(86) Internationale Anmeldenummer: PCT/EP2010/067965
(87) Internationale Veröffentlichungsnummer: WO 2011/082879

(56) Entgegenhaltungen:
- DE-A1- 10 234 111
- US-A1- 2002 141 672
- US-A1- 2004 007 935
- US-A1- 2004 036 369
- US-A1- 2007 205 679

## Beschreibung

Die Erfindung betrifft ein Lagerschild für einen Elektromotor mit einem Rotor und einem Stator, wobei das Lagerschild eine Aufnahme für ein Lager zur Lagerung einer Welle des Rotors aufweist und wobei das Lagerschild in einem Gehäuse des Elektromotors angeordnet ist.

### Stand der Technik

Es ist eine Vielzahl von Lagerschildern in Elektromotoren bekannt. Aus der DE 201 19 108 U1 ist ein Elektromotor mit einem Lagerschild bekannt, das eine Anlagefläche für wenigstens ein Bauteil, insbesondere eine Spule, aufweist. Die Spulen sind mittels Kabel mit einem Anschlussstecker verbunden. Die Kabel werden dabei mittels einer Kabeldurchführung durch das Lagerschild in den Innenraum eines Gehäuses des Elektromotors durchgeführt. Das Lagerschild weist ferner eine Anlagefläche mit einer Scheibe auf, wobei die Anlagefläche und die Scheibe zur Befestigung weiterer Bauteile dienen, wobei die Belüftung des Elektromotors nicht eingeschränkt werden soll.

Ferner ist aus der EP 1 024 581 B1 ein Elektromotor und ein Verfahren zur Kontaktierung von Wicklungen eines Elektromotors bekannt, wobei die Wicklungen derart gewickelt sind, dass die Drahtenden der Wicklungen an einer rückwärtigen Stirnseite die Wicklungen verlassen. An der Stirnseite der Wicklungen ist ferner ein Kontaktträger angeordnet, zu dem die Drahtenden der Wicklungen geführt und durch einen Greifer des Kontaktträgers gefasst sind, der zur Aufnahme der Drahtenden mit einer Aufnahmeeinrichtung in Form eines Kamms oder einer Gabel als Einfädelhilfe ausgerüstet ist. Dabei sind mindestens zwei der Drahtenden mit dem Greifer auf einer Stirnseite des Kontaktträgers zusammengeführt. Ferner sind die Enden der Wicklungen auf der Stirnseite des Kontaktträgers mittels eines Schneidklemmkontaktes miteinander leitend verbunden. Die Wicklungen sind dabei Teil des Stators. Ferner wird der Rotor über ein Lager, das im Gehäuse angeordnet ist, und über ein Lager, das in einem Lagerschild angeordnet ist, gelagert.

Die US 2002 014 1672 A1 offenbart einen Elektromotor mit einem Lagerschild gemäß der Präambel des Anspruchs 1.

Die US 2004 000 7935 A1 offenbart ein Lagerschild am Gehäuse eines Elektromotors, welches Stromführungen für die Wicklungen des Stators aufweist.

### Offenbarung der Erfindung

Es ist Aufgabe der Erfindung, ein Lagerschild für einen Elektromotor bereitzustellen, das einfach ausgebildet ist und den Bauraum für einen Elektromotor optimiert ausnutzt.

Diese Aufgabe wird durch ein Lagerschild gemäß Anspruch 1 sowie durch ein Verfahren zum Herstellen eines Elektromotors mit einem Lagerschild gemäß Anspruch 9 gelöst. Weitere Ausführungsformen sind in den Unteransprüchen ausgeführt.

Erfindungsgemäß wurde erkannt, dass das Lagerschild besonders einfach ausgebildet sein kann und einen bauraumoptimierten Innenraum des Elektromotors bereitstellt, indem das Lagerschild eine Stromführung aufweist, die wenigstens eine Wicklung des Stators mit einem Stromanschluss und/oder mit einer weiteren Wicklung des Stators verbindet.

Dies hat den Vorteil, dass die Aufgabe des Lagerschilds, das Lagern der Welle des Rotors, und die Aufgabe einer Kontaktplatte, die einzelnen Wicklungen des Stators des Elektromotors zu verschalten, in einer Baugruppe zusammengefasst sind, so dass der Bauraum im Innenraum eines Elektromotors optimiert ausgenutzt wird und in der Montage des Elektromotors die Montagezeit reduziert wird.

In einer weiteren Ausführungsform der Erfindung weist die Stromführung eine erste Kontaktfläche und eine zweite Kontaktfläche auf, wobei die erste Kontaktfläche mit dem Stromanschluss in Verbindung steht und die zweite Kontaktfläche mit wenigstens einer Wicklung verbunden ist. Auf diese Weise können die Wicklungen untereinander und mit dem Stromanschluss zuverlässig verbunden werden.

In einer weiteren Ausführungsform der Erfindung ist wenigstens eine der beiden Kontaktflächen als Schneidklemmkontakt ausgebildet. Dies hat den Vorteil, dass mittels eines Schneidklemmkontakts eine Kontaktierung mit den Zuleitungen der Wicklungen und/oder der Leitung des Stromanschlusses schnell und zuverlässig erfolgt.

In einer weiteren Ausführungsform der Erfindung ist das Lagerschild plattenförmig ausgeführt, wobei an einer ersten Seite des Lagerschilds die erste Kontaktfläche angeordnet ist und auf einer zweiten Seite des Lagerschildes die zweite Kontaktfläche angeordnet ist. Dies hat den Vorteil, dass die Zuleitungen zu den Wicklungen nicht durch das Lagerschild geführt werden müssen und so das Lagerschild schnell und zuverlässig im Elektromotor montiert werden kann, wobei in diesem Vorgang ebenso die Kontaktierung der Wicklungen erfolgt.

In einer weiteren Ausführungsform der Erfindung erfolgen eine Verbindung mit dem Stromanschluss an der ersten Kontaktfläche und/oder die Verbindung mit der Wicklung an der zweiten Kontaktfläche mittels eines Schweißprozesses, eines Lötprozesses oder eines Crimpprozesses. Auf diese Weise kann im Fertigungsprozess durch das Lagerschild schnell und zuverlässig eine Verbindung der Bauelemente des Elektromotors erfolgen.

In einer weiteren Ausführungsform der Erfindung ist die Stromführung schienenförmig ausgebildet und/oder mittels wenigstens eines Halteelements an dem Lagerschild befestigt. Auf diese Weise kann die Stromführung zuverlässig am Lagerschild befestigt werden.

In einer weiteren Ausführungsform der Erfindung weist das Lagerschild an der Aufnahme des Lagers wenigstens eine Rastnocke auf, die ausgelegt ist, das Lager und/oder eine Federscheibe an dem Lagerschild zu befestigen. Auf diese Weise kann das Lager und/oder eine Federscheibe schnell und zuverlässig in der Aufnahme fixiert werden.

In einer weiteren Ausführungsform der Erfindung weist die Rastnocke rückseitig zu einer Rastnase eine Aufnahme auf, die einen Federring aufnimmt. Auf diese Weise kann durch den Federring eine zusätzliche Haltekraft auf die Rastnocke zur Fixierung des Lagers und/oder der Federscheibe aufgebracht werden. Dies hat den Vorteil, dass das Lager und/oder die Federscheibe besonders robust in der Aufnahme fixiert sind.

In einer weiteren Ausführungsform der Erfindung weist das Lagerschild umfangsseitig wenigstens ein Rastelement auf, das ausgelegt ist, das Lagerschild im Gehäuse des Elektromotors festzulegen. Auf diese Weise kann das Lagerschild im Herstellungsprozess einfach im Gehäuse des Elektromotors fixiert werden.

Nachfolgend wird die Erfindung anhand von Figuren näher erläutert. Dabei zeigen:
Fig. 1 eine perspektivische Ansicht auf ein erstes Lagerschild;
Fig. 2 eine perspektivische Rückansicht des ersten Lagerschilds;
Fig. 3 einen Ausschnitt eines Schnittes durch ein Gehäuse eines Elektromotors mit dem eingebauten ersten Lagerschild;
Fig. 4 einen Querschnitt durch das erste Lagerschild;
Fig. 5 einen Querschnitt durch ein zweites Lagerschild;
Fig. 6 einen Querschnitt durch ein drittes Lagerschild;
Fig. 7 eine perspektivische Ansicht eines vierten Lagerschilds;
Fig. 8 eine perspektivische Ansicht eines fünften Lagerschilds, welches nicht Gegenstand der Erfindung ist;
Fig. 9 eine perspektivische Ansicht eines Stromführungsstrangs; und
Fig. 10 und Fig. 11 eine perspektivische Ansicht eines sechsten Lagerschilds.

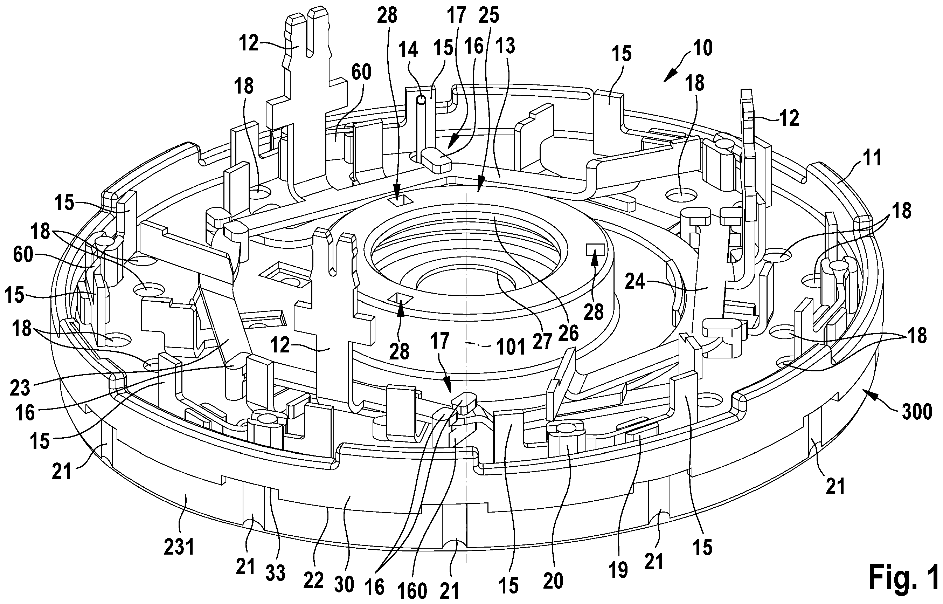

Fig. 1 zeigt eine perspektivische Ansicht eines ersten Lagerschilds 10 eines bürstenlosen Elektromotors. Der Elektromotor umfasst einen Rotor und einen Stator, die in einem Gehäuse angeordnet sind. Der Rotor ist mittels eines ersten im Gehäuse angeordneten und mittels eines im ersten Lagerschild 10 angeordneten Lagers gelagert. Im Stator sind mehrere Wicklungen angeordnet, die ein wechselndes Magnetfeld erzeugen.

Das erste Lagerschild 10 umfasst einen Träger 11, der scheibenförmig ausgebildet ist. Der Träger 11 weist mittig eine Lageraufnahme 25, die am Träger 11 angeordnet ist, auf. Ferner umfasst der Träger 11 umfangsseitig einen umlaufenden ersten Steg 300. An dem Träger 11 sind mehrere Stromführungen 13, 23, 24, 60 angeordnet. Die Stromführungen 13, 23, 24, 60 sind dabei in unterschiedlichen Ebenen teilweise übereinander am Träger 11 angeordnet. Dabei sind im Bereich der Stromführungen 13, 23, 24, 60 Durchgangsöffnungen 18 im Träger 11 angeordnet. Die Stromführungen 13, 23, 24, 60 sind schienenförmig ausgebildet und können beispielsweise in einem Stanz-Biegeprozess hergestellt werden.

Die Befestigung der Stromführungen 13, 23, 24, 60 erfolgt mittels der Halteelemente 17, 19, 20, wobei erste Halteelemente 17 einen Abstandshalter 160 und eine Haltenase 16 aufweisen. Der Abstandshalter 160 beabstandet die Stromschiene 13, 23, 24, 60 von einer Oberfläche des Trägers. Der Abstandshalter 160 legt somit auch die Befestigungsebene des Abstandshalters 13, 23, 24, 60 fest. Um die Stromführungen 13, 23, 24, 60 am Träger 11 zuverlässig zu befestigen, umfassen die Haltenasen 16 am ersten Halteelement 17 die einzelnen Stromführungen 13, 24, 23, 60 und legen so die Position der Stromführung 13, 23, 24, 60 fest. Die Haltenasen 16 können dabei in einem Warmprägeverfahren nach dem Einlegen der Stromführungen 13, 23, 24, 60 aus einer senkrecht stehenden Position um etwa 90° umgeknickt werden, so dass die Haltenasen 16 nach einem Abkühlen ein Verschieben der Stromführungen 13, 23, 24, 60 verhindern. Die einzelnen Stromführungen 13, 23, 24, 60 können durch die unterschiedlichen Längen des Abstandshalters 160 auf verschiedenen Ebenen angeordnet werden, so dass die einzelnen Stromschienen 13, 23, 24, 60 nicht gegen übereinander beispielsweise durch eine isolierte Oberfläche abisoliert werden müssen. Die Abstände der einzelnen Ebenen der Stromschienen 13, 23, 24, 60 sind so gewählt, dass die Stromschienen 13, 23, 24, 60 sich nicht gegen übereinander berühren.

Die Stromführungen 13, 23, 24 weisen jeweils eine erste Kontaktstelle 12 auf, die als Schneid-Klemmverbindung ausgeführt ist. Dies hat den Vorteil, dass die erste Kontaktstelle 12 in der Montage des Lagerschilds 10 schnell und zuverlässig mit einer Leitung des Stromanschlusses dauerhaft verbunden werden kann.

Die Stromführungen 13, 23, 24, 60 weisen ferner unterschiedlich angeordnete zweite Kontaktstellen 15 auf, wobei die zweiten Kontaktstellen 15 ebenso wie die ersten Kontaktstellen 12 parallel zu einer Rotorwellenachse 101 des Elektromotors ausgerichtet sind. Die zweiten Kontaktstellen 15 sind in einem Bereich der Durchgangsöffnungen 18 angeordnet. Durch die Durchgangsöffnungen 18 werden jeweils einzelne Leitungen 14 der Wicklungen durch den Träger 11 geführt. Die Leitungen 14 können mittels eines Schweiß-, eines Löt- oder eines Crimpprozesses an den zweiten Kontaktstellen 15 befestigt werden. Dies hat den Vorteil, dass eine zuverlässige Verbindung zwischen den Leitungen 14 der Wicklungen und den Stromführungen 13, 23, 24, 60 zur Verfügung gestellt wird. Es ist aber auch denkbar, die Leitungen 14 bzw. die Drähte der Wicklungen ebenso wie an den ersten Kontaktstellen 12 mittels eines Schneid-Klemmbereichs an den zweiten Kontaktflächen 15 zu befestigen.

Die einzelnen Stromführungen 13, 23, 24, 60 sind entsprechend ihrer Aufgabe, den Stromfluss durch die daran angeschlossenen Wicklungen zu verteilen, ausgestaltet. Die Wicklungen werden mittels eines Drehstromanschlusses bestromt, so dass die Stromführungen 13, 23, 24, 60 aus diesem Grunde drei Stromanschlüsse mit den ersten Kontaktstellen 12 aufweisen. Die einzelnen Wicklungen sind mittels der ersten Stromführungen 60 untereinander verbunden, die den Strom von einer ersten Wicklung zu einer zweiten Wicklung weiterleiten. Die an den ersten Stromführungen 60 angeordneten zweiten Kontaktstellen 15 dienen zum Anschluss der Wicklung.

Umfangsseitig ist an dem Träger 11 ein erster Steg 300 angeordnet. Der erste Steg 300 weist mehrere Absätze 22, 220 sowie Einbuchtungen 21 auf, um den Träger 11 in einem Gehäuse des Elektromotors festzulegen. Die Einbuchtungen 21 dienen zur Aufnahme einer am Gehäuse angeordneten nicht dargestellten Quetschrippe. Beim Einschieben des Lagerschilds 10 in das Gehäuse des Elektromotors werden die Quetschrippen durch das Aufschieben der Einbuchtungen auf die Quetschrippen plastisch verformt und legen durch Formschluss die Position des Lagerschilds 10 fest. Eine axiale Verschiebung des Lagerschilds 10 wird durch einen ersten Absatz 22 am ersten Steg 300 festgelegt, der ein weiteres Verschieben bei der Montage des Lagerschilds 10 in Richtung der Wicklungen verhindert. Eine rotatorische Verschiebung wird ferner durch mehrere am Absatz 22 angeordnete erste Ausnehmungen 33 verhindert, indem die ersten Ausnehmungen 33 eine Ausbuchtung des Gehäuses des Elektromotors aufnehmen.

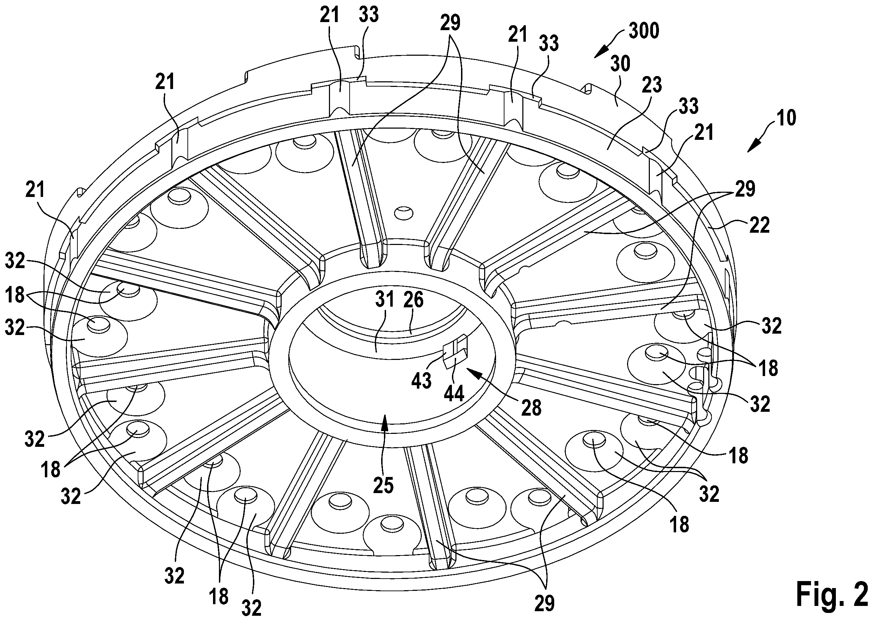

Fig. 2 zeigt eine perspektivische Rückansicht des ersten Lagerschilds 10. Mittig ist in dem plattenförmigen ersten Lagerschild 10 eine Lageraufnahme 25 angeordnet. Das Lagerschild 10 weist zur Abstützung der Lagerkräfte eine Mehrzahl von zweiten Stegen 29 auf, die den ersten Steg 300 mit der Lageraufnahme 25 verbinden. Zwischen den einzelnen ausgebildeten Segmenten der einzelnen zweiten Stege 29 sind jeweils Durchgangsöffnungen 18 angeordnet. Zur leichteren Durchführung von den Drähten der Wicklungen weisen die Durchgangsöffnungen 18 einen angefasten Bereich 32 auf.

Die Lageraufnahme 25 weist an ihrer inneren Umfangsfläche ein erstes Rastelement 28 mit einer Rastnase 44 und einer Rastfeder 43 auf. Das erste Rastelement 28 ist ausgelegt, eine Federscheibe zu halten. Dies hat den Vorteil, dass während der Montage des Lagerschildes 10 kein zusätzliches Werkzeug benötigt wird, um die Federscheibe, die für die Lagerung benötigt wird, vor dem Herausfallen aus der Lageraufnahme 25 zu sichern.

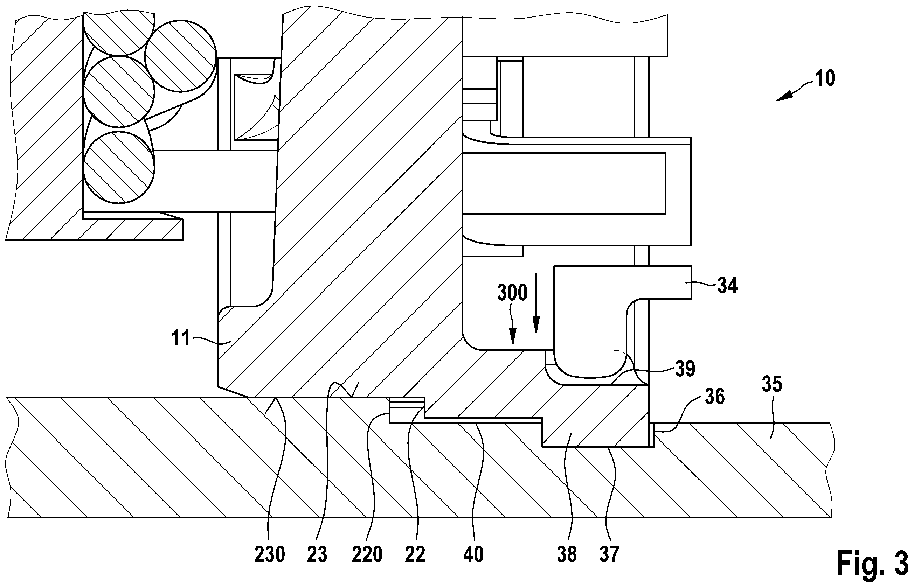

Fig. 3 zeigt einen Ausschnitt eines Schnitts durch ein Gehäuse 35 des Elektromotors mit dem ersten Lagerschild 10. An dem ersten Lagerschild 10 ist innenseitig zum ersten Steg 300 ein Warmprägestempel 34 angeordnet. Der Warmprägestempel 34 ist ausgelegt, an einer Prägefläche 39 des ersten Lagerschilds 10 aufgesetzt zu werden und die Prägefläche 39 zu erwärmen. Das Gehäuse 35 des Elektromotors weist eine zweite Ausnehmung 37 auf. Nach einem Erwärmen des ersten Stegs 300 im Bereich der Prägefläche 39 drückt der Warmprägestempel 34 den ersten Steg 300 umfangsseitig nach außen in Richtung des Gehäuses 35 des Elektromotors. Dadurch wird der erste Steg 300 nach außen gepresst und passt sich der Kontur der zweiten Ausnehmung 37 des Gehäuses 35 an.

Das Gehäuse 35 weist ferner einen zweiten Absatz 220 auf, der dem ersten Absatz 22 zugeordnet ist. Die beiden Absätze 22, 220 dienen dazu, dass das erste Lagerschild 10 nicht zu tief in das Gehäuse 39 des Elektromotors bei der Montage in Richtung der Wicklungen eingeschoben werden kann. Eine Umfangsfläche 231 des ersten Lagerschilds 10 dient zur Abstützung der über die zweiten Stege 29 übertragenen Lagerkräfte an einer Innenseite 230 des Gehäuses 35.

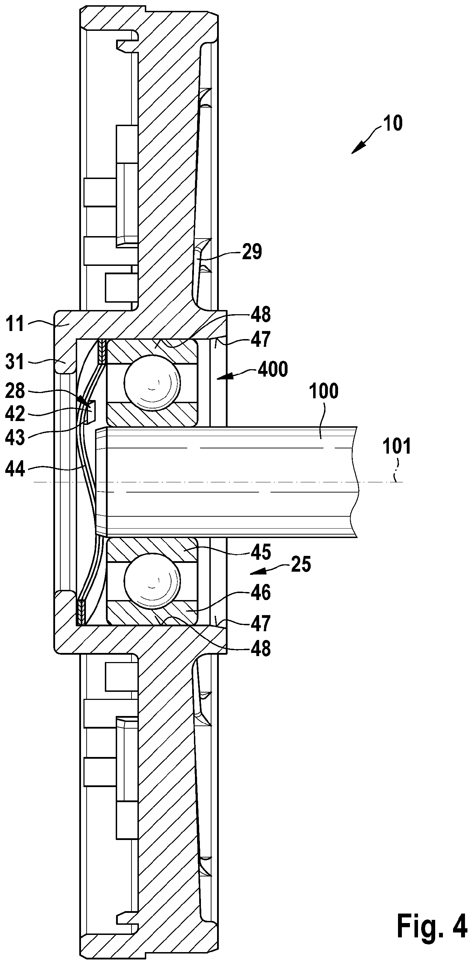

Fig. 4 zeigt einen Querschnitt durch das erste Lagerschild 10. An dem ersten Lagerschild 10 sind ferner ein Wälzlager 400 sowie die Federscheibe 44 angeordnet. Das Wälzlager 400 lagert die Rotorwelle 100. Das Wälzlager 400 weist einen Innenring 45, der der Rotorwelle 100 zugeordnet ist, sowie einen Außenring 46, der der Lageraufnahme 25 zugeordnet ist, auf. Die Lageraufnahme 25 umfasst dabei eine umfangsseitig angeordnete Lagerfläche 48 sowie das erste Rastelement 28. Linksseitig ist zum Wälzlager 400 die Federscheibe 44 angeordnet. Die Federscheibe 44 liegt sowohl am Außenring 46 als auch an einem dritten Absatz 31 an, der die Lagerfläche 48 in axialer Richtung begrenzt.

Die Rotorwelle 100 ist mittels des Wälzlagers 400 gelagert. Hierzu ist die Rotorwelle 100 im Innenring 45 des Wälzlagers 400 eingepresst. Der Außenring 46 verfügt auf der Lagerfläche 48 über einen Schiebesitz. Die Lagerfläche 48 ist rechtzeitig mit einer Fase 47 versehen, um das Einschieben des aufgepressten Wälzlagers mit der Rotorwelle in das Lagerschild zu erleichtern. Das erste Rastelement rastet mit der Rastnase 42 an der Federscheibe 44 und gewährleistet so eine einfache Montage der Federscheibe 44 im ersten Lagerfeld 10.

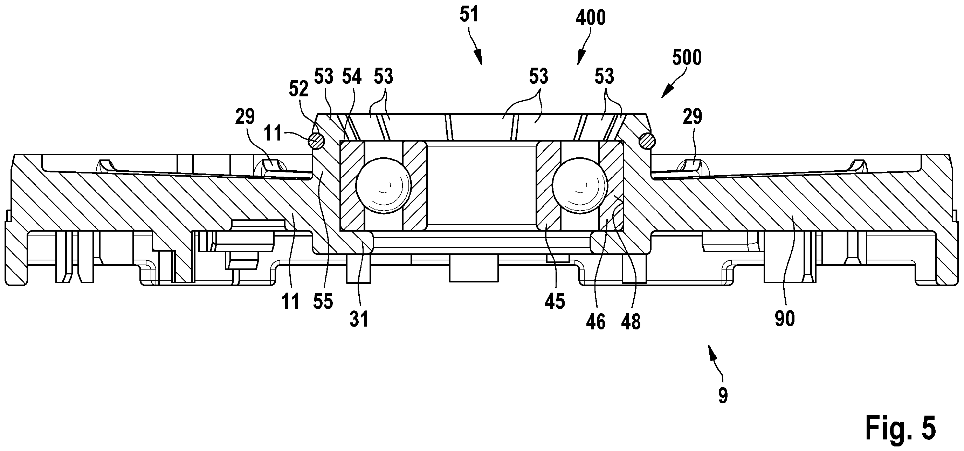

Fig. 5 zeigt einen Querschnitt durch ein zweites Lagerschild 9. Das zweite Lagerschild 9 ist ähnlich wie das erste Lagerschild 10 ausgebildet. Jedoch unterscheidet sich hierzu der Aufnahmebereich 25 des Lagers von der in Fig. 1 bis Fig. 4 gezeigten Ausführungsform des ersten Lagerschilds 10. Um das Wälzlager 400 in einem zweiten Träger 90 des zweiten Lagerschilds 9 zu befestigen, weist der zweite Träger 90 entlang der Lagerfläche 48 eine Vielzahl von zweiten Rastelementen 51 auf. Gegenüberliegend wird die Lagerfläche 48 von dem dritten Absatz 31 begrenzt. Die Rastelemente 51 weisen eine zweite Rastfeder 53 sowie eine zweite Rastnase 54 auf. An der zum Wälzlager 400 abgewandten Seite der Rastfeder 53 weist die Rastfeder 53 eine Aufnahme 52 für einen Federring 50 auf. Die Aufnahme 52 ist umlaufend um die zweiten Rastelemente 51 ausgebildet. Die zweite Rastnase 54 begrenzt die Lagerfläche 48 und verhindert ein Verschieben des Außenrings 46 des Wälzlagers 400 aus der Lagerfläche 48 hinaus.

Die zweiten Rastelemente 51 haben den Vorteil, dass das Wälzlager 400 einfach und zügig in der Montage in den zweiten Träger 90 eingebracht werden kann. Wird das Wälzlager 400 in Richtung seiner Lagerposition gepresst, so werden die Rastnasen 54 durch die federnde Aufhängung durch die zweiten Rastfedern 53 aus dem Verschiebeweg des Wälzlagers gedrückt. Befindet sich das Wälzlager am Anschlag, so liegt der Außenring 46 mit einer Seitenfläche am dritten Absatz 31 an. Eine Verschiebung entgegen der Montagerichtung wird durch die nach der Montage wieder hineinschnappenden zweiten Rastelemente 51 mit den zweiten Rastnasen 54 verhindert.

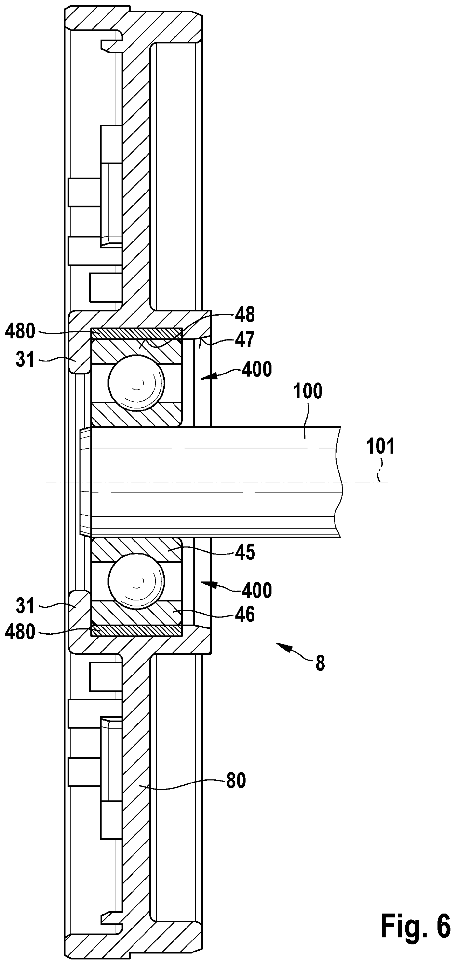

Fig. 6 zeigt einen Querschnitt durch ein drittes Lagerschild 8. Das Wälzlager 400 ist im Gegensatz zu der in Fig. 5 gezeigten Ausführungsform mittels eines Presssitzes am Außenring 46 eines dritten Trägers 80 des dritten Lagerschilds 8 befestigt. Das dritte Lagerschild 8 weist im Bereich der Lagerfläche 48 des dritten Trägers 80 eine Hülse 480 auf, die beispielsweise aus einem metallischen Werkstoff gefertigt ist. Die Hülse 480 wurde im weiteren Herstellungsverfahren des dritten Lagerschildes 8 mit dem Material, beispielsweise Kunststoff, des dritten Trägers 80 umspritzt. Die Hülse 480 dient dazu, dem Wälzlager 400 einen zuverlässigen Presssitz am Außenring 46 zu gewährleisten. Am Innenring 45 ist die Rotorwelle 100 mittels eines Schiebesitzes angeordnet. Es ist aber auch denkbar, dass das Wälzlager 400 bereits bei der Herstellung des dritten Trägers 80 mit Material umspritzt wird. Ebenso ist ein Presssitz am Außenring 46 des Wälzlagers ohne die gezeigte Hülse 480 möglich. Der dritte Absatz 31 dient bei dem Presssitz des Wälzlagers 400 dazu, die axiale Position in der Montage des Wälzlagers 400 in dem dritten Lagerschild 8 festzulegen.

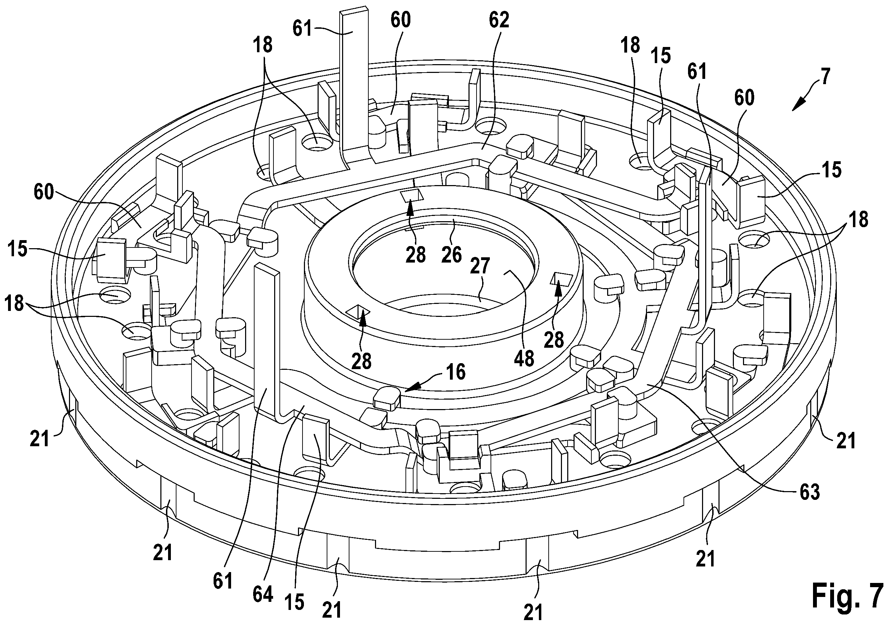

Fig. 7 zeigt eine perspektivische Ansicht eines vierten Lagerschilds 7. Das vierte Lagerschild 7 ist ähnlich ausgebildet wie das in Fig. 1 bis Fig. 4 gezeigte erste Lagerschild 10. Das vierte Lagerschild 7 weist dritte Kontaktstellen 61 auf. Die dritten Kontaktstellen 61, die die in Fig. 1 gezeigten ersten Kontaktstellen 12 ersetzen, sind auf eine Kontaktierung mittels eines Kontaktschuhs ausgelegt. Dies hat den Vorteil, dass insbesondere bei einer Kontaktierung mit Leitungen höheren Querschnitts diese zuverlässig an der dritten Kontaktstelle 61 mit einem Kontaktschuh befestigt werden können. Die schienenförmige Auslegung der Stromführungen 13, 23, 24, 60 gewährleistet auch einen bei hohen Strömen notwendigen Querschnitt.

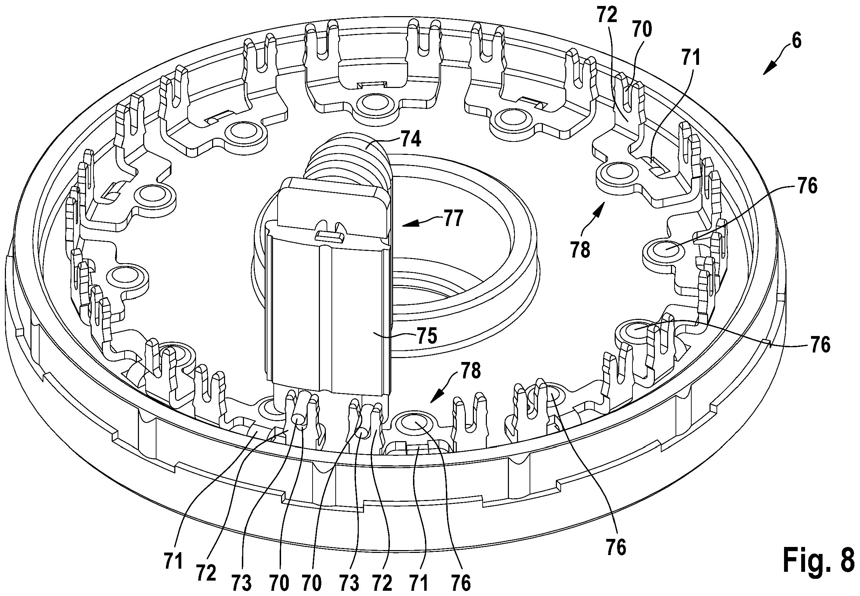

Fig. 8 zeigt eine perspektivische Ansicht eines fünften Lagerschilds 6, welches nicht Gegenstand der Erfindung ist. Zusätzlich ist zu dem fünften Lagerschild 6 ein Wickelkörper 77 mit einem Polschuh 75 und einer Wicklung 74 dargestellt. Das fünfte Lagerschild 6 weist sowohl auf der zur Innenseite hin des Elektromotors gerichteten Seite als auch auf der Außenseite des Lagerschildes Stromführungen 13, 24, 23, 60, 78 auf, wobei die Stromführungen 13, 24, 23, 60, 78 mittels eines zweiten Halteelements 76 an dem fünften Lagerschild 6 befestigt sind. An dem Polschuh 75 sind zwei stiftförmige Kontaktelemente 73 angeordnet. Jeweils ein Kontaktelement 73 ist mit einem Ende der Wicklung 74 verbunden. Die innenseitig angeordneten zweiten Stromführungen 78 weisen nach innen in das Gehäuse des Elektromotors ragende dritte Kontaktstellen 72 auf, die jeweils eine Kontaktaufnahme 70 aufweisen. In die Kontaktaufnahme 70 greift das Kontaktelement 73 des Wickelkörpers 77 ein. Die zweiten Stromführungen 78 sind über ein Stromführungselement 71 mit den auf der Außenseite liegenden Stromführungen 13, 23, 24 verbunden. Dies hat den Vorteil, dass die Wicklungen mit den Polschuhen beim Einschieben des fünften Lagerschilds 6 in den Elektromotor durch das Eingreifen der Kontaktstellen 72 in die stiftförmigen Kontaktelemente 73 automatisch miteinander verbunden werden. Auf diese Weise kann die in Fig. 1 bis Fig. 7 gezeigte Durchführung von Leitungen der Wicklungen durch das fünfte Lagerschild 6 sowie ein anschließendes Verbinden der Drähte mit den Kontaktflächen vermieden werden. Auf diese Weise kann das fünfte Lagerschild 6 einfach und schnell im Elektromotor, gegebenenfalls auch durch automatische Fertigungssysteme, eingebaut werden.

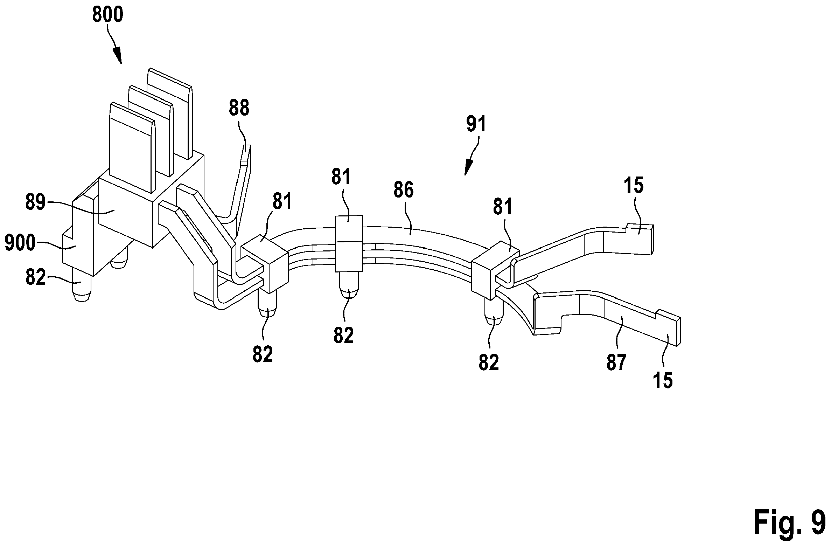

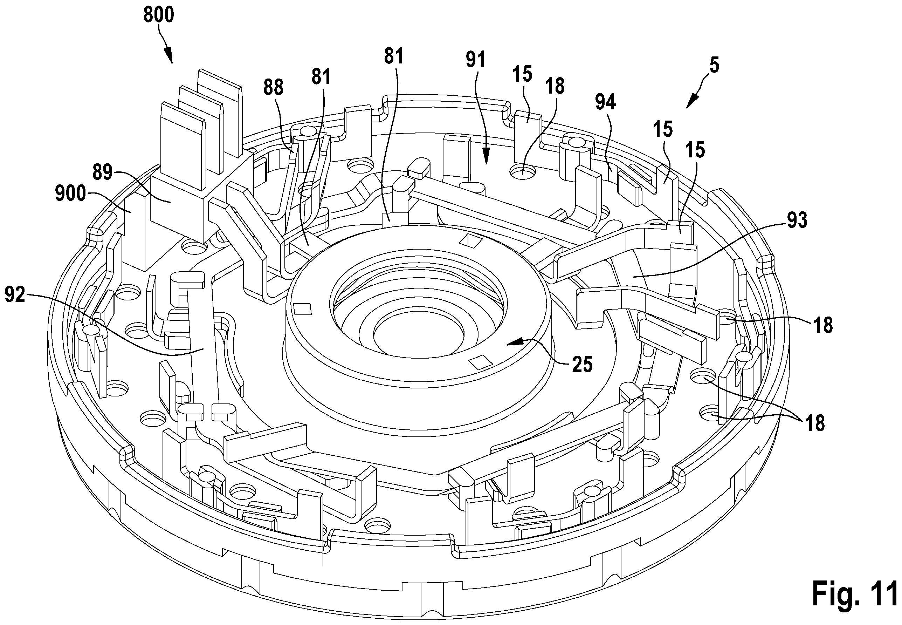

Fig. 9 zeigt eine perspektivische Ansicht eines Stromführungsstrangs 91. Der Stromführungsstrang weist drei Stromführungen 86, 87, 88 auf, die in einem gemeinsamen Anschluss 800 zusammenlaufen. Die einzelnen Stromführungen 86, 87, 88 werden durch Stromführungshalteelemente 81 beabstandet und an einem in Fig. 11 gezeigten sechsten Lagerschild 5 mittels der Befestigungselemente 82 am sechsten Lagerschild 5 befestigt. Der Anschluss 800 weist seitlich ein Abstützelement 900 auf, um den Anschluss 800 mittels Befestigungselementen 82 im sechsten Lagerschild 5 zu befestigen und die Kräfte zum Aufschieben einer Steckbuchse auf dem Anschluss 800 zuverlässig abzustützen.

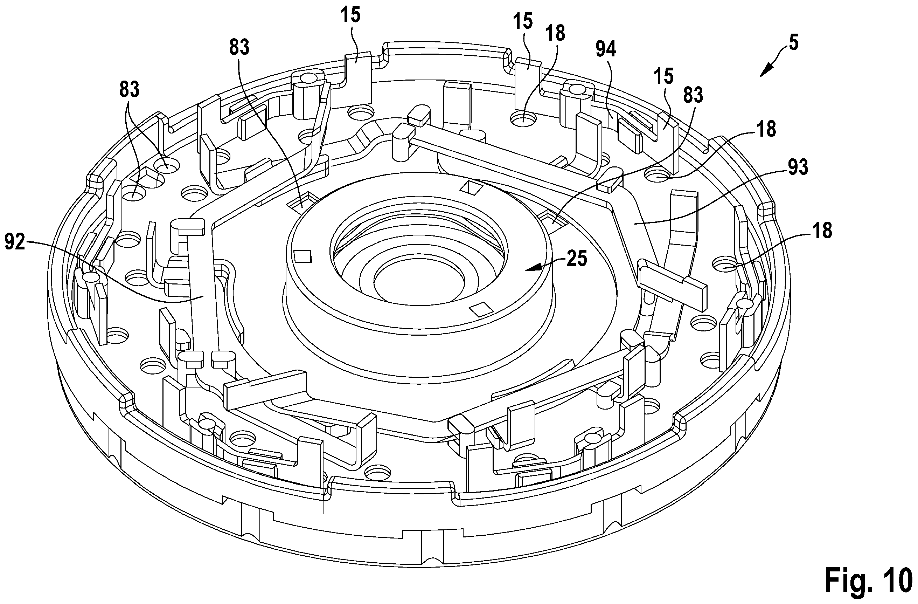

Fig. 10 und Fig. 11 zeigen eine perspektivische Ansicht des sechsten Lagerschilds 5. Das sechste Lagerschild 5 dient zur Aufnahme des in Fig. 10 gezeigten Stromführungsstrangs 91. Die Befestigungselemente 82 des Stromführungsstrangs 91 greifen dafür in Befestigungsöffnungen 83 ein. Eine Kontaktierung der Stromführungen 92, 93, 94 erfolgt, indem die Leitungen der Wicklungen durch die Durchgangsöffnungen 18 geführt sind und an den Kontaktflächen 15 befestigt sind. Auf diese Weise können die Wicklungen entsprechend dem Verschaltungsschema verschaltet werden.

Dem Fachmann ist selbstverständlich geläufig, dass die gezeigten Ausführungsformen der Lagerschilder beispielhaft sind. Wesentlich dabei ist jedoch, dass das Lagerschild zusätzlich zur üblichen Aufnahme für eine Lagerung Stromführungen aufweist, die mit den Wicklungen und dem Stromanschluss in Verbindung stehen. Auf diese Weise kann auf eine separate Verschaltung der Wicklungen über eine Verschaltplatte verzichtet werden. Dies resultiert in einer kürzeren Montagezeit des Elektromotors sowie in einem bauraumoptimierten Aufbau des Elektromotors.

## Patentansprüche

1. Lagerschild (5; 6; 7; 8; 9; 10) für einen Elektromotor mit einem Rotor und einem Stator, wobei das Lagerschild (5; 6; 7; 8; 9; 10) eine Aufnahme (25) für ein Lager (400) zur Lagerung einer Welle (100) des Rotors aufweist und wobei das Lagerschild (5; 6; 7; 8; 9; 10) in einem Gehäuse (35) des Elektromotors angeordnet ist,
**dadurch gekennzeichnet, dass** das Lagerschild (5; 6; 7; 8; 9; 10) eine Stromführung (13, 23, 24, 60; 86, 87, 88; 92, 93, 94) aufweist, die ausgelegt ist, wenigstens eine Wicklung (74) des Stators mit einem Stromanschluss und/oder mit einer weiteren Wicklung (74) des Stators zu verbinden,
wobei das Lagerschild (5; 6; 7; 8; 9; 10) wenigstens eine Öffnung (18) aufweist, um einen Anschluss der Wicklung (74) durch das Lagerschild (5; 6; 7; 8; 9; 10) zu führen.

2. Lagerschild (5; 6; 7; 8; 9; 10) nach Anspruch 1, **dadurch gekennzeichnet, dass** die Stromführung (13, 23, 24, 60; 86, 87, 88; 92, 93, 94) eine erste Kontaktfläche (12) und eine zweite Kontaktfläche (15) aufweist, wobei die erste Kontaktfläche (12) mit dem Stromanschluss in Verbindung steht und die zweite Kontaktfläche (15) mit der Wicklung (74) verbunden ist.

3. Lagerschild (5; 6; 7; 8; 9; 10) nach Anspruch 2, **dadurch gekennzeichnet, dass** wenigstens eine der beiden Kontaktflächen (12, 15) als Schneidklemmkontakt ausgebildet ist.

4. Lagerschild (5; 6; 7; 8; 9; 10) nach Anspruch 2 oder 3, **dadurch gekennzeichnet, dass** das Lagerschild (5; 6; 7; 8; 9; 10) plattenförmig **oder scheibenförmig** ausgeführt ist

5. Lagerschild (5; 6; 7; 8; 9; 10) nach einem der Ansprüche 2 bis 4, **dadurch gekennzeichnet, dass** eine Verbindung mit dem Stromanschluss an der ersten Kontaktfläche (12) und/oder die Verbindung mit der Wicklung (74) an der zweiten Kontaktfläche (15) mittels Schweißen, Löten oder mittels Crimpen erfolgt ist.

6. Lagerschild (5; 6; 7; 8; 9; 10) nach Anspruch 1 bis 5, **dadurch gekennzeichnet, dass** die Stromführung (13, 23, 24, 60; 86, 87, 88; 92, 93, 94) schienenförmig ausgebildet ist und/oder mittels wenigstens einem Halteelement (17, 19, 20) an dem Lagerschild (5; 6; 7; 8; 9; 10) befestigt ist.

7. Lagerschild (5; 6; 7; 8; 9; 10) nach Anspruch 6, **dadurch gekennzeichnet, dass** das Halteelement (17, 19, 20) wenigstens eine Rastnase aufweist, die dazu ausgelegt ist, die Stromführung (13, 23, 24, 60; 86, 87, 88; 92, 93, 94) am Halteelement (17, 19, 20) zu befestigen.

8. Lagerschild (5; 6; 7; 8; 9; 10) nach einem der Ansprüche 1 bis 7, **dadurch gekennzeichnet, dass** das Lagerschild (5; 6; 7; 8; 9; 10) an der Aufnahme (25) des Lagers (400) wenigstens ein Rastelement (28, 91) aufweist, das ausgelegt ist, das Lager (400) und/oder eine Federscheibe (44) an dem Lagerschild (5; 6; 7; 8; 9; 10) zu befestigen.

9. Lagerschild (5; 6; 7; 8; 9; 10) nach einem der Ansprüche 1 bis 8, **dadurch gekennzeichnet, dass** das Lagerschild (5; 6; 7; 8; 9; 10) umfangsseitig wenigstens eine Ausnehmung (33, 37) aufweist, die ausgelegt ist, das Lagerschild (5; 6; 7; 8; 9; 10) im Gehäuse (35) des Elektromotors festzulegen.

## Claims

1. Bearing plate (5; 6; 7; 8; 9; 10) for an electric motor having a rotor and a stator, wherein the bearing plate (5; 6; 7; 8; 9; 10) has a receptacle (25) for a bearing (400) for supporting a shaft (100) of the rotor, and wherein the bearing plate (5; 6; 7; 8; 9; 10) is arranged in a housing (35) of the electric motor, wherein the bearing plate (5; 6; 7; 8; 9; 10) has a power conduction system (13, 23, 24, 60; 86, 87, 88; 92, 93, 94) which is configured to connect at least one winding (74) of the stator to a power terminal and/or to a further winding (74) of the stator, wherein the bearing plate (5; 6; 7; 8; 9; 10) has at least one opening (18) in order to lead a connection of the winding (74) through the bearing plate (5; 6; 7; 8; 9; 10), wherein the power conduction system (13, 23, 24, 60; 86, 87, 88; 92, 93, 94) is attached to the bearing plate (5; 6; 7; 8; 9; 10) by means of at least one securing element (174, 19, 20),
**characterized in that** the securing element (17, 19, 20) has at least one latching projection which is configured to attach the power conduction system (13, 23, 24, 60; 86, 87, 88; 92, 93, 94) to the securing element (17, 19, 20).

2. Bearing plate (5; 6; 7; 8; 9; 10) according to Claim 1, **characterized in that** the power conduction system (13, 23, 24, 60; 86, 87, 88; 92, 93, 94) has a first contact face (12) and a second contact face (15), wherein the first contact face (12) is connected to the power terminal, and the second contact face (19) is connected to the winding (74).

3. Bearing plate (5; 6; 7; 8; 9; 10) according to Claim 2, **characterized in that** at least one of the two contact faces (12, 15) is embodied as an insulation-displacement contact.

4. Bearing plate (5; 6; 7; 8; 9; 10) according to Claim 2 or 3, **characterized in that** the bearing plate (5; 6; 7; 8; 9; 10) is embodied in the form of a plate or disk.

5. Bearing plate (5; 6; 7; 8; 9; 10) according to Claims 1 to 4, **characterized in that** the power conduction system (13, 23, 24, 60; 86, 87, 88; 92, 93, 94) is embodied in the form of a rail.

6. Bearing plate (5; 6; 7; 8; 9; 10) according to one of Claims 2 to 4, **characterized in that** the connection to the power terminal on the first contact face (12) and/or the connection to the winding (74) on the second contact face (15) has been carried out by means of welding, soldering or by means of crimping.

7. Bearing plate (5; 6; 7; 8; 9; 10) according to one of Claims 1 to 6, **characterized in that** the bearing plate (5; 6; 7; 8; 9; 10) has, at the receptacle (25) of the bearing (400), at least one latching element (28, 91) which is configured to attach the bearing (400) and/or a spring disk (44) to the bearing plate (5; 6; 7; 8; 9; 10).

8. Bearing plate (5; 6; 7; 8; 9; 10) according to one of Claims 1 to 7, **characterized in that** the bearing plate (5; 6; 7; 8; 9; 10) has at the circumference at least one recess (33, 37) which is configured to secure the bearing plate (5; 6; 7; 8; 9; 10) in the housing (35) of the electric motor.

## Revendications

1. Flasque de palier (5 ; 6 ; 7 ; 8 ; 9 ; 10) pour un moteur électrique comprenant un rotor et un stator, le flasque de palier (5 ; 6 ; 7 ; 8 ; 9 ; 10) possédant un logement (25) pour un palier (400) destiné à supporter un arbre (100) du rotor et le flasque de palier (5 ; 6 ; 7 ; 8 ; 9 ; 10) étant disposé dans un boîtier (35) du moteur électrique, le flasque de palier (5 ; 6 ; 7 ; 8 ; 9 ; 10) possédant une commutation électrique (13, 23, 24, 60 ; 86, 87, 88 ; 92, 93, 94) qui est conçue pour relier au moins un enroulement (74) du stator à une borne électrique et/ou à un enroulement (74) supplémentaire du stator, le flasque de palier (5 ; 6 ; 7 ; 8 ; 9 ; 10) possédant au moins une ouverture (18) pour faire passer une borne de l'enroulement (74) à travers le flasque de palier (5 ; 6 ; 7 ; 8 ; 9 ; 10), la commutation électrique (13, 23, 24, 60 ; 86, 87, 88 ; 92, 93, 94) étant fixée au flasque de palier (5 ; 6 ; 7 ; 8 ; 9 ; 10) au moyen d'au moins un élément de maintien (174, 19, 20), **caractérisé en ce que** l'élément de maintien (17, 19, 20) possède au moins un tenon d'encliquetage qui est conçu pour fixer la commutation électrique (13, 23, 24, 60 ; 86, 87, 88 ; 92, 93, 94) à l'élément de maintien (17, 19, 20) .

2. Flasque de palier (5 ; 6 ; 7 ; 8 ; 9 ; 10) selon la revendication 1, **caractérisé en .ce que** la commutation électrique (13, 23, 24, 60 ; 86, 87, 88 ; 92, 93, 94) possède une première surface de contact (12) et une deuxième surface de contact (15), la première surface de contact (12) se trouvant en liaison avec la borne électrique et la deuxième surface de contact (19) étant reliée à l'enroulement (74).

3. Flasque de palier (5 ; 6 ; 7 ; 8 ; 9 ; 10) selon la revendication 2, **caractérisé en ce qu'**au moins l'une des deux surfaces de contact (12, 15) est réalisée sous la forme d'un contact à borne guillotine.

4. Flasque de palier (5 ; 6 ; 7 ; 8 ; 9 ; 10) selon la revendication 2 ou 3, **caractérisé en ce que** le flasque de palier (5 ; 6 ; 7 ; 8 ; 9 ; 10) est réalisé en forme de plaque ou en forme de disque.

5. Flasque de palier (5 ; 6 ; 7 ; 8 ; 9 ; 10) selon les revendications 1 à 4, **caractérisé en ce que** la commutation électrique (13, 23, 24, 60 ; 86, 87, 88 ; 92, 93, 94) est réalisée en forme de rail.

6. Flasque de palier (5 ; 6 ; 7 ; 8 ; 9 ; 10) selon l'une des revendications 2 à 4, **caractérisé en ce qu'**une liaison avec la borne électrique au niveau de la première surface de contact (12) et/ou la liaison avec l'enroulement (74) au niveau de la deuxième surface de contact (15) est réalisée au moyen du soudage, du brasage ou au moyen du sertissage.

7. Flasque de palier (5 ; 6 ; 7 ; 8 ; 9 ; 10) selon l'une des revendications 1 à 6, **caractérisé en ce que** le flasque de palier (5 ; 6 ; 7 ; 8 ; 9 ; 10) possède au moins un élément d'encliquetage (28, 91) au niveau du logement (25) du palier (400), lequel est conçu pour fixer le palier (400) et/ou une rondelle élastique (44) au flasque de palier (5 ; 6 ; 7 ; 8 ; 9 ; 10).

8. Flasque de palier (5 ; 6 ; 7 ; 8 ; 9 ; 10) selon l'une des revendications 1 à 7, **caractérisé en ce que** le flasque de palier (5 ; 6 ; 7 ; 8 ; 9 ; 10) possède au moins une cavité (33, 37) du côté du pourtour, laquelle est conçue pour caler le flasque de palier (5 ; 6 ; 7 ; 8 ; 9 ; 10) dans le boîtier (35) du moteur électrique.
